# EUROPÄISCHE PATENTANMELDUNG

(11) **EP 4 272 571 A1**
(43) Veröffentlichungstag der Anmeldung: **08.11.2023**
(21) Anmeldenummer: 22171809.1
(22) Anmeldetag: 05.05.2022
(51) Int. Cl.: A23L 2/84

(54) **SAFTKONZENTRAT MIT VERRINGERTEM ZUCKERGEHALT UND HERSTELLUNGSVERFAHREN**

(71) Anmelder: Austria Juice GmbH, 3365 Allhartsberg (AT)
(72) Erfinder: HOLDENRIED, Thomas, 3300 Amstetten (AT); ZACHE, Ulrich, 55424 Münster-Sarmsheim (DE); HAPPE, Andreas, 55425 Waldalgesheim (DE); URBAN-KLIK, Manfred, 3500 Krems (AT)
(74) Vertreter: SONN Patentanwälte OG

(57) **Zusammenfassung**

Offenbart wird ein Verfahren zur Herstellung eines Saftkonzentrats mit verringertem Zuckergehalt, bei dem der Zuckergehalt eines Safts nach Zugabe von Mikroorganismen durch Fermentation verringert wird und das durch die Fermentation entstandene Ethanol mit weiteren Fermentationsprodukten in einem Verdampfer abgetrennt wird, wodurch das Saftkonzentrat mit verringertem Zuckergehalt erhalten wird. Des Weiteren offenbart wird ein Saftkonzentrat, vorzugsweise ein Fruchtsaftkonzentrat oder Gemüsesaftkonzentrat, das aus diesem Verfahren erhältlich ist, sowie ein Verfahren zur Herstellung eines Safts mit verringertem Zuckergehalt aus diesem Saftkonzentrat.

## Beschreibung

Das Gebiet der Erfindung betrifft Verfahren zur Herstellung von Saftkonzentraten und Säften mit verringertem Zuckergehalt sowie die daraus erhaltenen Saftkonzentrate und Säfte.

Fruchtsäfte, Fruchtweine und Fruchtbrände, sowie Getränke aus diesen Lebensmitteln werden bereits seit sehr langer Zeit, teilweise seit Jahrhunderten und Jahrtausenden hergestellt. Fruchtsäfte und deren Herstellungsverfahren sind nicht nur in der EU durch Direktiven und Expertengutachten (Code of Practice der AIJN, der European Fruit Juice Association), sondern auch im internationalen Codex Alimentarius der WHO spezifiziert. Durch die natürliche Komposition der Inhaltstoffe der Früchte bzw. des aus ihnen gewonnen Saftes, die etablierten Verfahren und den erwünschten Mindesttrockensubstanzgehalt der Fruchtsäfte ergibt sich ein Zuckergehalt der Fruchtsäfte von in der Regel 5 Gew% bis 20 Gew%, je nach Fruchtart.

Aufgrund des steigenden Gesundheitsbewusstseins der Konsumenten erfreuen sich auch Gemüsesäfte wachsender Beliebtheit. Eben dieses steigende Gesundheitsbewusstsein führt auch dazu, dass Getränke mit reduziertem Zuckergehalt im allgemeinen Trend liegen.

Im Stand der Technik sind Verfahren zur Verringerung des Zuckergehaltes bekannt:
Die EP 2 404 508 A1 offenbart ein Verfahren zur Verringerung des Zuckergehalts von Fruchtsäften, wobei der bei der Vergärung entstandene Alkohol durch Umkehrosmose entfernt wird. Die WO 2019/106564 A1 beschreibt ein Verfahren zur Verringerung des Zuckergehalts auf Basis von Adsorption (z.B. an Zeolith). Auch die US 5 403 604 beschäftigt sich mit derartigen Verfahren.

Die Dokumente EP 0 382 010 A1 bzw. EP 055 488 A1 beziehen sich auf Verfahren zur Verringerung des Zuckergehalts in Fruchtsäften auf der Basis von nichtfermentierenden Mikroorganismen, die keinen Alkohol bilden können, wie *Trichosporon brassicae* bzw. auf der Basis von Verfahrensbedingungen, die alkoholische Gärung vermeiden.

Das US-Patent US 4 971 813 A bezieht sich auf ein Verfahren zur Herstellung eines konzentrierten Fruchtsafts mit geringem Kaloriengehalt. Dabei werden flüchtige Aroma- bzw. Geschmacksstoffe unter Vakuum abgetrennt und gesammelt. Die nicht-flüchtige Saftfraktion wird alkoholischer Gärung mit einer Hefe unterzogen, der dadurch gebildete Alkohol wird abdestilliert. Abschließend werden die eingangs gesammelten, flüchtigen Stoffe der Saftfraktion wieder zugesetzt, um einen Getränk mit reduziertem Kaloriengehalt zu erhalten.

Schwabl et al. (Mitteilungen Klosterneuburg 70 (2020): 102-114) beschäftigt sich mit der Entwicklung und sensorischen Charakterisierung eines kalorienreduzierten Getränks auf Apfelsaftbasis. Im Zuge jener Arbeit wurde ein Verfahren zur Herstellung eines kalorienreduzierten Getränkes auf Apfelsaftbasis mittels Fermentation erprobt. Im ersten Schritt wurden die Aromen des Apfelsaftes abgedampft und kühl gelagert. In der Folge wurde das aromafreie Konzentrat vergoren. Anschließend wurden der Alkohol und die Gäraromen entfernt. Die aroma-, alkohol- und zuckerfreie Fraktion wurde mit dem ursprünglichen im ersten Behandlungsschritt konservierten Apfelaroma, Wasser und pasteurisiertem Apfelsaft mit naturbelassenem Zuckergehalt zu einem kalorienreduzierten Apfelsaftgetränk gemischt.

Die Patentschrift CH 632 137 A5 betrifft ein Verfahren zur Herstellung eines alkoholfreien Fruchtsaftgetränks mit vermindertem Kaloriengehalt sowie das aus diesem Verfahren hergestellte Fruchtsaftgetränk. Zucker wird durch Mikroorganismen oder Enzyme abgebaut, die dabei entstandenen Abbauprodukte (z.B. Alkohol) anschließend entfernt (z.B. durch Destillation).

Die US-Patentanmeldung US 2016/0165944 A1 betrifft ein Verfahren zur Verringerung des Saccharidgehalts in Saftkonzentraten. Auch bei diesem Verfahren wird der Saccharidgehalt durch alkoholische Gärung verringert, allerdings wird der Alkohol nicht abdestilliert, sondern - nachdem der Alkohol in einen Gasstrom aufgenommen wurde - durch Adsorption (z.B. an Zeolith) entfernt. In jenem Dokument wird die Entfernung des Alkohols durch Destillation als nachteilig beschrieben: Der Saccharidgehalt von Säften ist weitaus geringer als der von Saftkonzentraten, so dass dieses Verfahren für Konzentrate als Ausgangsmaterial nicht geeignet sei. Insbesondere bei Saftkonzentraten mit einem Saccharidgehalt von mehr als 20 % (w/v) könne häufig nur ein Teil der Saccharide aufgeschlossen werden, da die Verstoffwechselung der zur Fermentation eingesetzten Mikroorganismen durch eine schnell ansteigende Alkoholkonzentration stark verlangsamt und oft sogar gehemmt werde. Außerdem sei die destillative Abtrennung des entstandenen Alkohols gerade in diesem Fall besonders nachteilig, da die verbleibenden Saccharide schon bei geringer Erwärmung sogenannte Maillard-Reaktionen mit im Konzentrat vorhandenen Aminverbindungen eingingen. Maillard-Reaktionen könnten zu zahlreichen unerwünschten Verbindungen im Produkt führen. Außerdem komme es zu einer unschönen Dunkelfärbung des Konzentrats. Diese Verbindungen beeinträchtigten auch die sensorischen Eigenschaften des Konzentrats und des daraus hergestellten Saftes.

Es ist eine Aufgabe der vorliegenden Erfindung, ein verbessertes Verfahren zur Herstellung eines Saftkonzentrats mit durch Fermentation verringertem Zuckergehalt zur Verfügung zu stellen. Dabei sollen Nachteile von Verfahren aus dem Stand der Technik überwunden werden. Insbesondere soll dadurch die Herstellung von zuckerreduzierten Saftkonzentraten bzw. von aus den Saftkonzentraten erhaltenen, zuckerreduzierten Säften ermöglicht werden, deren sensorische Eigenschaften möglichst optimal sind bzw. möglichst nahe an originalen, nicht zuckerreduzierten Säften sind. Zusätzlich oder alternativ dazu sollen die erfindungsgemäßen Verfahren bzw. Produkte großtechnisch so reibungslos bzw. mit so niedrigem Aufwand wie möglich anwendbar bzw. verwendbar sein und/oder kompatibel zu etablierten Prozessen in der Frucht- bzw. Gemüsesaftherstellung sein.

Daher betrifft die vorliegende Erfindung ein Verfahren zur Herstellung eines Saftkonzentrats mit verringertem Zuckergehalt, umfassend zumindest die folgenden Schritte:
a) Bereitstellen von Saft mit einem Brixwert A und einem Zuckergehalt Z, wobei der Saft vorzugsweise ein Fruchtsaft oder ein Gemüsesaft ist,
b) Entaromatisieren des Safts, um eine Aromakomponente und einen entaromatisierten Saft zu erhalten,
c) Aufkonzentrieren des entaromatisierten Safts, um ein erstes Saftkonzentrat zu erhalten, wobei das Saftkonzentrat vorzugsweise ein Fruchtsaftkonzentrat oder ein Gemüsesaftkonzentrat ist,
d) Rückverdünnen des ersten Saftkonzentrats auf einen Brixwert B, wobei der Brixwert B höher ist als der Brixwert A und wobei der Brixwert B zwischen 15° und 35°, bevorzugt zwischen 20° und 30°, liegt, wodurch ein zweites Saftkonzentrat mit dem Brixwert B erhalten wird, wobei das Saftkonzentrat vorzugsweise ein Fruchtsaftkonzentrat oder ein Gemüsesaftkonzentrat ist,
e) Zugabe von Mikroorganismen, die zur alkoholischen Gärung fähig sind,
f) Fermentieren des zweiten Saftkonzentrats unter Gärbedingungen, welche die alkoholische Gärung erlauben, wodurch ein fermentiertes Erzeugnis mit einem Ethanolgehalt von zumindest 6 vol%, bevorzugt zumindest 8 vol%, insbesondere zumindest 10 vol%, erhalten wird und
g) Abtrennen von Ethanol und weiteren Fermentationsprodukten aus dem fermentierten Erzeugnis in einem Verdampfer, vorzugsweise einem Fallstromverdampfer, Plattenverdampfer, Dünnschichtverdampfer oder Zentrifugalverdampfer, wodurch das Saftkonzentrat mit verringertem Zuckergehalt erhalten wird, wobei das Saftkonzentrat vorzugsweise ein Fruchtsaftkonzentrat oder ein Gemüsesaftkonzentrat ist.

In einem weiteren Aspekt betrifft die vorliegende Erfindung ein Verfahren zur Herstellung eines Safts mit verringertem Zuckergehalt, wobei der Saft vorzugsweise ein Fruchtsaft oder ein Gemüsesaft ist, umfassend zumindest die folgenden Schritte:
- Bereitstellen eines Saftkonzentrats mit verringertem Zuckergehalt, das nach dem hierin offenbarten Verfahren zur Herstellung eines Saftkonzentrats mit verringertem Zuckergehalt erhalten worden ist, und
- Verdünnen (z.B. mit Wasser) und Vermischen mit einem Saft oder einem weiteren Saftkonzentrat, so dass der Saft mit verringertem Zuckergehalt erhalten wird, wobei der verringerte Zuckergehalt unter dem Zuckergehalt Z (wie hierin offenbart) liegt. Vorzugsweise beträgt der verringerte Zuckergehalt im Vergleich zum Zuckergehalt Z 90% oder weniger, 80% oder weniger, 70% oder weniger, 60% oder weniger, 50% oder weniger (liegt also bei 90% von Z oder darunter, 80% von Z oder darunter, 70% von Z oder darunter, usw.).

Vorzugsweise wird bei den erfindungsgemäßen Verfahren zumindest ein Teil der zuvor abgetrennten Aromakomponente (in das Saftkonzentrat oder den Saft) rückgeführt.

In noch einem weiteren Aspekt betrifft die vorliegende Erfindung ein Saftkonzentrat, vorzugsweise Fruchtsaftkonzentrat oder Gemüsesaftkonzentrat, erhältlich gemäß dem hierin offenbarten Verfahren bzw. einen Saft, vorzugsweise Fruchtsaft oder Gemüsesaft, erhältlich gemäß dem hierin offenbarten Verfahren.

In einem weiteren Aspekt betrifft die vorliegende Erfindung ein Saftkonzentrat mit verringertem Zuckergehalt, wobei das Saftkonzentrat ausgewählt ist aus:
Apfelsaftkonzentrat mit einem Zuckergehalt von höchstens 17%gew, bevorzugt höchstens 14%gew, insbesondere höchstens 11%gew, einem Kaliumgehalt von mindestens 15.000mg/kg, bevorzugt mindestens 17.000 mg/kg, insbesondere mindestens 23.000 mg/kg, einem Essigsäuregehalt von höchstens 1000 mg/kg oder gar höchstens 900 mg/kg , bevorzugt höchstens 800 mg/kg, insbesondere höchstens 700 mg/kg (üblicherweise aber zumindest 10 mg/kg), und vorzugsweise einem Glyceringehalt von zumindest 40 g/L, bevorzugt zumindest 42 g/L, insbesondere zumindest 45 g/L, (üblicherweise aber höchstens 65 g/L) und einem Orangensaftkonzentrat mit einem Zuckergehalt von höchstens 17%gew, bevorzugt höchstens 14%gew, insbesondere höchstens 11%gew, einem Kaliumgehalt von mindestens 9500mg/kg, bevorzugt mindestens 12.000 mg/kg, insbesondere mindestens 15.000 mg/kg, einem Essigsäuregehalt von höchstens 300 mg/kg oder gar höchstens 280 mg/kg, bevorzugt höchstens 240 mg/kg, insbesondere höchstens 200 mg/kg, (üblicherweise aber zumindest 10 mg/kg) und vorzugsweise einem Glyceringehalt von 16 g/L zumindest 18 g/L, bevorzugt zumindest 20 g/L, insbesondere zumindest 22 g/L, (üblicherweise aber höchstens 27 g/L).

In einem letzten Aspekt betrifft die vorliegende Erfindung einen Saft mit verringertem Zuckergehalt, wobei der Saft ausgewählt ist aus:
(sortenreinem) Apfelsaft mit einem Zuckergehalt von höchstens 81 g/L, bevorzugt höchstens 72 g/L, insbesondere höchstens 63 g/L, einem Kaliumgehalt von 900 mg/L - 1500 mg/L, bevorzugt 1000 mg/L - 1400 mg/L, insbesondere 1100 mg/L - 1300 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
(sortenreinem) Orangensaft mit einem Zuckergehalt von höchstens 72 g/L, bevorzugt höchstens 64 g/L, insbesondere höchstens 56 g/L, einem Kaliumgehalt von 1300 mg/L - 2500 mg/L, bevorzugt 1500 mg/L -2300 mg/L, insbesondere 1600 mg/L - 2200 mg/L, einem Essigsäuregehalt von höchstens 400 mg/L, bevorzugt höchstens 300 mg/L, insbesondere höchstens 200 mg/L, und vorzugsweise einem Glyceringehalt von zumindest 0,6 g/L, bevorzugt zumindest 0,9 g/L, insbesondere zumindest 1,2 g/L,
(sortenreinem) Ananassaft mit einem Zuckergehalt von höchstens 90 g/L, bevorzugt höchstens 80 g/L, insbesondere höchstens 70 g/L, einem Kaliumgehalt von 900 mg/L - 2000 mg/L, bevorzugt 1000 mg/L - 1900 mg/L, insbesondere 1100 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
(sortenreinem) Bananensaft mit einem Zuckergehalt von höchstens 145,8 g/L, bevorzugt höchstens 129,6 g/L, insbesondere höchstens 113,4 g/L, einem Kaliumgehalt von 2900 mg/L - 4200 mg/L, bevorzugt 3100 mg/L - 4000 mg/L, insbesondere 3300 mg/L - 3800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
(sortenreinem) Birnensaft mit einem Zuckergehalt von höchstens 78,3 g/L, bevorzugt höchstens 69,6 g/L, insbesondere höchstens 60,9 g/L, einem Kaliumgehalt von 1000 mg/L - 2000 mg/L, bevorzugt 1100 mg/L - 1900 mg/L, insbesondere 1200 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
(sortenreinem) Kiwisaft mit einem Zuckergehalt von höchstens 68,4 g/L, bevorzugt höchstens 60,8 g/L, insbesondere höchstens 53,2 g/L, einem Kaliumgehalt von 2500 mg/L - 4600 mg/L, bevorzugt 2700 mg/L - 4400 mg/L, insbesondere 2900 mg/L - 4200 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L, und
(sortenreinem) Weintraubensaft mit einem Zuckergehalt von höchstens 120,6 g/L, bevorzugt höchstens 107,2 g/L, insbesondere höchstens 93,8 g/L, einem Kaliumgehalt von 900 mg/L - 2000 mg/L, bevorzugt 1000 mg/L - 1900 mg/L, insbesondere 1100 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L.

Ein Vorteil des erfindungsgemäßen Verfahrens ist, dass das erste Saftkonzentrat (vgl. Schritt c, oben) durch seine erhöhte Haltbarkeit einen äußerst geeigneten Haltepunkt im Verfahren darstellt, der beispielsweise Transport (z.B. zu einer anderen Anlage) oder die Lagerung ermöglicht. Es hat sich im Zuge der Erfindung jedoch herausgestellt, dass eine Rückverdünnung dieses Konzentrats zu einem Brixwert B zwischen 15° und 35° (bevorzugt zwischen 20° und 30°; vgl. Schritt d) eine effektivere Fermentation ermöglicht (und letztlich zu einem sensorisch besseren Produkt führt). Durch den höheren Alkoholgehalt des in Schritt f) erhaltenen fermentierten Erzeugnisses ergibt sich wiederum ein äußerst geeigneter Haltepunkt im Verfahren, der beispielsweise Transport (z.B. zu einer anderen Anlage) oder die Lagerung ermöglicht.

Mit den hierin offenbarten erfindungsgemäßen Verfahren können erstmals die hierin offenbarten, erfindungsgemäßen Produkte hergestellt werden, die trotz verringertem Zuckergehalt hervorragende sensorische Eigenschaften aufweisen. Auch der durch das erfindungsgemäße Verfahren erzielte Glyceringehalt hat (auch durch den leicht süßlichen Geschmack des Glycerins) einen gewissen förderlichen Einfluss auf das Geschmacksbild vor allem hinsichtlich des Mundgefühls.

Die folgende detaillierte Beschreibung betrifft die Verfahren und Produkte (d.h. Säfte und Saftkonzentrate) gleichermaßen, z.B. bevorzugte Verfahrensmerkmale entsprechen auch Eigenschaften oder Eignungen der Produkte bzw. ihrer entsprechenden Inhaltsstoffe und bevorzugte Produktmerkmale entsprechen auch Mitteln, die im erfindungsgemäßen Verfahren eingesetzt werden. Alle vorzugsweisen Merkmale sind miteinander kombinierbar, es sei denn dies wurde explizit ausgeschlossen. Alle Verfahrensmerkmale, inklusive die der oben genannten, sind miteinander kombinierbar. Alle Produktmerkmale, inklusive die der oben genannten, sind miteinander kombinierbar.

Im Lichte der vorliegenden Offenbarung ist für den Fachmann evident, dass die Reihenfolge der Schritte der erfindungsgemäßen Verfahren (insbesondere der Schritte a) - g) beliebig gewählt werden kann bzw. Schritte gleichzeitig ausgeführt werden können, insoweit dies technisch zweckmäßig ist. Beispielsweise kann die Reihenfolge der Schritte d) und e) vertauscht werden bzw. können diese Schritte auch gleichzeitig durchgeführt werden. Zusätzlich oder alternativ dazu können beispielsweise die Schritte b) und c) gleichzeitig durchgeführt werden, z.B. in einem dafür geeigneten Verdampfer. Bevorzugt ist die Durchführung der Schritte in der alphabetischen Reihenfolge a) - g), allenfalls mit gleichzeitiger Durchführung aufeinander folgender Schritte, insoweit dies technisch sinnvoll ist.

In Schritt a) des erfindungsgemäßen Verfahrens zur Herstellung eines Saftkonzentrats mit verringertem Zuckergehalt wird Saft mit einem Brixwert A und einem Zuckergehalt Z bereitgestellt. Dieser Saft ist vorzugsweise ein Fruchtsaft oder ein Gemüsesaft. Insbesondere ist der Fruchtsaft Apfelsaft oder Orangensaft, bevorzugt mit einem der folgenden Brixwerte A und/oder einem der folgenden Zuckergehalte Z:

| | Brixwert A | Zuckergehalt Z |
|---|---|---|
| Apfelsaft (NFC/Direktsaft) | ≥ 10,0° | ca. 10 Gew% |
| Apfelsaft (aus Apfelsaftkonzentrat) | ≥ 11,2° | ca. 10 Gew% |
| Orangensaft (NFC/Direktsaft) | ≥ 10,0° | ca. 8,0-8,5 Gew% |
| Orangensaft (aus Orangensaftkonzentrat | ≥ 11,2° | ca. 8,0-8,5 Gew% |

In einer bevorzugten Ausführungsform weist der Saft (insbesondere der Fruchtsaft oder Gemüsesaft) einen Brixwert A von mindestens 5°, bevorzugt mindestens 10° auf, oder von 4°-30°, bevorzugt von 10°-25°.

In einer weiteren bevorzugten Ausführungsform ist der Saft ein Fruchtsaft, ausgewählt aus Apfelsaft, Aprikosensaft, Bananensaft, Johannisbeersaft, Weintraubensaft, Grapefruitsaft, Guavensaft, Zitronensaft, Mangosaft, Orangensaft, Passionsfruchtsaft, Kiwisaft, Pfirsichsaft, Birnensaft, Ananassaft, Himbeersaft, Sauerkirschensaft, Erdbeersaft, Tomatensaft, Mandarinensaft und Gemischen davon, insbesondere ausgewählt aus Apfelsaft, Birnensaft und Orangensaft; oder ein Gemüsesaft, ausgewählt aus Karottensaft, Rote-Bete-Saft und Gemischen davon; oder ein Gemisch aus dem vorgenannten Fruchtsaft und aus dem vorgenannten Gemüsesaft.

In den Schritten b) und c) des erfindungsgemäßen Verfahrens zur Herstellung eines Saftkonzentrats mit verringertem Zuckergehalt wird der Saft entaromatisiert und der entaromatisierte Saft aufkonzentriert, um das erste Saftkonzentrat zu erhalten. Diese Schritte können in dafür geeigneten Verdampfern (unter Vakuum) auch gleichzeitig durchgeführt werden. Es hat sich für die weitere Verbesserung der Lagerfähigkeit des ersten Saftkonzentrats als vorteilhaft herausgestellt, wenn das erste Saftkonzentrat einen Brixwert von zumindest 40°, bevorzugt zumindest 45°, mehr bevorzugt zumindest 50°, noch mehr bevorzugt zumindest 55° oder gar zumindest 60°, insbesondere zumindest 65° oder gar zumindest 70° aufweist. Üblicherweise wird ein Brixwert von 75° nicht wesentlich überschritten.

Das Abtrennen der Aromakomponente bringt den Vorteil mit sich, dass die empfindlicheren Geschmacks- und Aromastoffe durch die Fermentation bzw. die weiteren Verfahrensschritte nicht beeinträchtigt werden (wodurch es zu Geschmacksverlust oder Geschmacksverfälschungen im Produkt kommen würde). Für den Fachmann ist jedoch evident, dass dieser Entaromatisierungsschritt nicht vollständig (d.h. so dass überhaupt keine Aroma- oder Geschmacksstoffe mehr im entaromatisierten Saft verbleiben) ablaufen kann. Die Aromakomponente kann sich aus mehreren Fraktionen zusammen setzen, die getrennt voneinander (gekühlt) gelagert werden.

In einer bevorzugten Ausführungsform weist das erste Saftkonzentrat für eine bessere Lagerfähigkeit einen Wasseranteil von 25 Gew% bis 40 Gew%, bevorzugt 30 Gew% - 35 Gew%, auf.

Für möglichst optimale Voraussetzungen für die nachfolgende Gärung wird in Schritt d) des erfindungsgemäßen Verfahrens zur Herstellung eines Saftkonzentrats mit verringertem Zuckergehalt das erste Saftkonzentrat auf einen Brixwert B rückverdünnt, wobei der Brixwert B höher ist als der Brixwert A und wobei der Brixwert B zwischen 15° und 35°, bevorzugt zwischen 20° und 30°, liegt, wodurch ein zweites Saftkonzentrat mit dem Brixwert B erhalten wird. Dieses zweite Saftkonzentrat hat sich im Zuge der vorliegenden Erfindung als besonders gut geeignet für den fermentativen Abbau des Zuckers in einem möglichst hohen Ausmaß erwiesen, wobei zugleich in Schritt g) eine schonendere Abtrennung des Ethanols ermöglicht wird, was sich wiederum positiv auf die sensorischen Eigenschaften des Endprodukts auswirkt.

In Schritt e) des erfindungsgemäßen Verfahrens zur Herstellung eines Saftkonzentrats mit verringertem Zuckergehalt werden Mikroorganismen, die zur alkoholischen Gärung fähig sind, zugegeben. In einer bevorzugten Ausführungsform umfassen die Mikroorganismen zumindest Hefe der Gattung *Saccharomyces,* vorzugsweise *Saccharomyces cerevisiae,* insbesondere *Saccharomyces cerevisiae* var. cerevisiae oder *Saccharomyces cerevisiae* var. bayanus. Es ist besonders bevorzugt, (ausschließlich) Reinzuchthefen zuzugeben, um das Risiko möglichst zu minimieren, dass während der Gärung Nebenprodukte entstehen, die einen unerwünschten Beigeschmack ("Off-Flavour") im Endprodukt verursachen.

Zweckmäßigerweise werden auch Nährstoffe für die Mikroorganismen zugegeben, um die Fermentation möglichst reibungslos ablaufen zu lassen. Unter den Begriff "Nährstoffe", wie hierin verwendet, fallen auch Mineralstoffe und Vitamine. Als Nährstoffe besonders bevorzugt sind Phosphatsalz (z.B. Ammoniumphosphat) und/oder Thiamin.

Bei der Zugabe der Nährstoffe ist darauf Bedacht zu nehmen, dass der Geschmack des Endprodukts möglichst nicht verfälscht werden soll, d.h. die zugegebene Menge sollte vorzugsweise so gering wie möglich sein und dennoch eine reibungslose Fermentation (d.h. einen vollständigen Ablauf der Fermentation) ermöglichen. In einer bevorzugten Ausführungsform wird vor dem Fermentieren nur so viel Phosphat(salz) hinzugegeben, dass die Phosphatkonzentration im fermentierten Erzeugnis nach dem Entfernen von zumindest einem Teil der Mikroorganismen nicht über 150%, bevorzugt nicht über 140%, mehr bevorzugt nicht über 130%, noch mehr bevorzugt nicht über 120%, insbesondere nicht über 110% oder nicht über 105% der Phosphatkonzentration im zweiten Saftkonzentrat (erhalten mit Schritt d) liegt.

In Schritt f) des erfindungsgemäßen Verfahrens zur Herstellung eines Saftkonzentrats mit verringertem Zuckergehalt wird das zweiten Saftkonzentrat unter Gärbedingungen, welche die alkoholische Gärung erlauben, fermentiert. Diese Gärbedingungen umfassen vorzugsweise eine Gärtemperatur zwischen 15° und 35°C, bevorzugt 15°C bis 25°C, insbesondere zwischen 20°C bis 25°C. Die Fermentation wird bevorzugt für 5-15 Tage durchgeführt.

Zweckmäßigerweise wird eine Inkubation unter Belüftung (d.h. aerob) vorgeschaltet, um die nachfolgende Fermentation möglichst reibungslos ablaufen zu lassen. Erst danach wird Schritt f) durchgeführt, vorzugsweise durchgehend unter anaeroben Bedingungen.

Durch Schritt f) wird ein fermentiertes Erzeugnis mit einem Ethanolgehalt von zumindest 6 vol%, bevorzugt zumindest 8 vol%, insbesondere zumindest 10 vol% oder gar zumindest 12 vol%, erhalten. Üblicherweise wird ein Ethanolgehalt von 17 vol% nicht wesentlich überschritten.

Zweckmäßigerweise wird nach Schritt f) zumindest ein Teil der Mikroorganismen entfernt, vorzugsweise ist zu diesem Zweck ein Filtrationsschritt nachgeschaltet.

In einer besonders bevorzugten Ausführungsform wird (insbesondere zwischen den Schritten f) und g) ein Stabilisierungsschritt durchgeführt. Dabei werden Stabilisierungsmittel bzw. Schönungsmittel (wie z.B. Bentonit, Aktivkohle, Kieselsol und/oder Proteine, beispielsweise Protein aus Erbsen oder anderen Hülsenfrüchten oder Kartoffeln) zugegeben. Zweckmäßigerweise ist diesem Stabilisierungsschritt ein Filtrationsschritt (zur Entfernung der Stabilisierungsmittel bzw. Schönungsmittel) nachgeschaltet.

In Schritt g) des erfindungsgemäßen Verfahrens zur Herstellung eines Saftkonzentrats mit verringertem Zuckergehalt werden nun Ethanol und weitere Fermentationsprodukte (wie Essigsäure, Ethylacetat, Acetaldehyd, Frucht-Ester und/oder Fuselöle; insbesondere Essigsäure) aus dem fermentierten Erzeugnis in einem Verdampfer abgetrennt. Dadurch wird das Saftkonzentrat mit verringertem Zuckergehalt erhalten. Bevorzugte Parameter sind beispielsweise 40-115 °C und Unterdruck (0-900 mbar).

Das daraus erhaltene Saftkonzentrat mit verringertem Zuckergehalt weist vorzugsweise einen Brixwert zwischen 10° und 60° auf.

Für den Fachmann ist evident, dass dieser Abtrennungsschritt nicht vollständig (d.h. so dass überhaupt kein Alkohol sowie überhaupt keine Fermentationsprodukte im Saftkonzentrat verbleiben) ablaufen kann. Ein gewisser, geringer Alkoholanteil kann in Frucht- und Gemüsesäften toleriert werden.

Geeignete Verdampfer sind dem Fachmann im Lichte dieser Beschreibung bekannt. Geeignete Verdampfer sind beispielsweise in Cyklis 2022 (Journal of Food Engineering 317 (2022): 110884.), Adnan & Mushtaq 2018 (in: Fruit Juices. Academic Press, 2018. 217-240.) und US 4 971 813 A offenbart.

Als Verdampfer werden bevorzugt Fallstromverdampfer, Plattenverdampfer, Dünnschichtverdampfer oder Zentrifugalverdampfer eingesetzt.

In einer bevorzugten Ausführungsform ist der Verdampfer mit einer Vakuumpumpe ausgestattet, um zusätzlich Unterdruck zu erzeugen.

In einer weiteren bevorzugten Ausführungsform erfolgt das Abtrennen von Ethanol in Schritt g) in einem mehrstufigen Verdampfer bei stufenweiser Absenkung der Temperatur. Dadurch wird möglichst schonend vorgegangen und die sensorischen Eigenschaften des Endprodukts werden verbessert.

In einer weiteren bevorzugten Ausführungsform ist das Saftkonzentrat mit verringertem Zuckergehalt ein Fruchtsaftkonzentrat, ausgewählt aus Apfelsaftkonzentrat, Aprikosensaftkonzentrat, Bananensaftkonzentrat, Johannisbeersaftkonzentrat, Weintraubensaftkonzentrat, Grapefruitsaftkonzentrat, Guavensaftkonzentrat, Zitronensaftkonzentrat, Mangosaftkonzentrat, Orangensaftkonzentrat, Passionsfruchtsaftkonzentrat, Pfirsichsaftkonzentrat, Birnensaftkonzentrat, Kiwisaftkonzentrat, Ananassaftkonzentrat, Himbeersaftkonzentrat, Sauerkirschensaftkonzentrat, Erdbeersaftkonzentrat, Tomatensaftkonzentrat, Mandarinensaftkonzentrat und Gemischen davon, insbesondere ausgewählt aus Apfelsaftkonzentrat, Birnensaftkonzentrat und Orangensaftkonzentrat; oder ein Gemüsesaftkonzentrat, ausgewählt aus Karottensaftkonzentrat, Rote-Bete-Saftkonzentrat und Gemischen davon; oder ein Gemisch aus dem vorgenannten Fruchtsaftkonzentrat und aus dem vorgenannten Gemüsesaftkonzentrat.

In einer weiteren, bevorzugten Ausführungsform weist das Verfahren zusätzlich einen Schritt h) auf: h) Verschneiden des Saftkonzentrates mit verringertem Zuckergehalt mit einem weiteren Saftkonzentrat, so dass ein Zuckergehalt von 5% bis 90% des Zuckergehalts Z erzielt wird. Vorzugsweise wird zuvor oder dabei zumindest ein Teil der zuvor abgetrennten Aromakomponente rückgeführt. Das so erhaltene Saftkonzentrat kann in diversen Lebensmitteln und Getränken eingesetzt werden, die einen bestimmten Saftgehalt haben, jedoch mit merkbarer Zuckerreduktion im Vergleich zu Lebensmitteln und Getränken auf der Grundlage von Vollzuckersäften (z.B. für Mischgetränke, Saftgetränke, Fruchtsaftgetränke).

Der Brixwert (°Brix) bezieht sich auf eine Einheit, die den Gehalt an löslichen Feststoffen in einer Lösung angibt. Ein Grad Brix entspricht 1 Gramm Saccharose in 100 Gramm Saccharose-Wasser-Lösung und stellt somit die Konzentration der löslichen Feststoffe in der Lösung in Gewichtsprozent (% w/w) dar. Eine Lösung hat einen Brixwert von 1°, wenn die Dichte dieser Lösung die gleiche ist wie die einer Lösung von 1 Gramm Saccharose in 100 Gramm Saccharose/Wasser-Lösung (bei 20°C und Normaldruck). Der Brixwert wird üblicherweise mit einem Refraktometer gemessen.

Im Folgenden wird die Erfindung anhand von bevorzugten, nicht einschränkenden Beispielen und Zeichnungen näher erläutert.

**Fig. 1** zeigt eine Ausführungsform des erfindungsgemäßen Verfahrens zur Herstellung eines Saftkonzentrats mit verringertem Zuckergehalt. Abkürzungen: BX - Brix, ABV - Ethanolgehalt (vol%).

**Fig. 2** zeigt eine weitere Ausführungsform dieses Verfahrens. Abkürzungen: BX - Brix, ABV - Ethanolgehalt (vol%); tw - teilweise.

### Beispiel 1

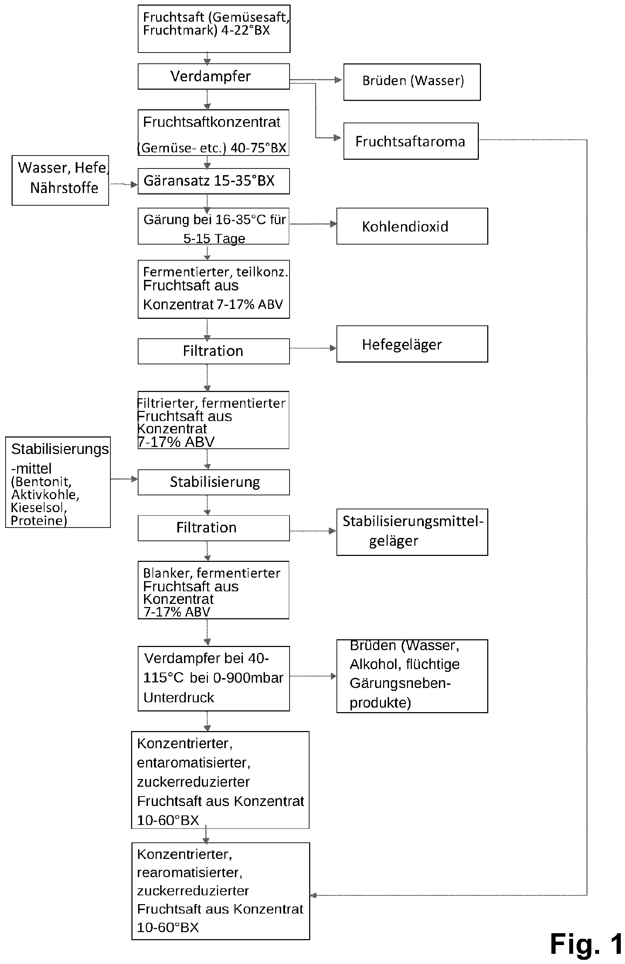

Eine Ausführungsform des erfindungsgemäßen Verfahrens zur Herstellung eines Saftkonzentrats mit verringertem Zuckergehalt wird in Figur 1 gezeigt. Ein Fruchtsaft (z.B. Apfel- oder Orangensaft), oder wahlweise ein Gemüsesaft oder ein Fruchtmark, mit einem Brixwert zwischen 4° bis 22° und einem Zuckergehalt Z wird in einem Verdampfer (beispielsweise in einem Fallstromverdampfer) zu einem Konzentrat (d. h. einem Fruchtsaftkonzentrat oder einem Gemüsesaftkonzentrat) aufkonzentriert. Das dabei abgetrennte Saftaroma (d. h. Fruchtsaftaroma oder Gemüsesaftaroma) wird später im Prozess wieder zugeführt. Danach werden Mikroorganismen (z.B. *Saccharomyces cerevisiae* var. bayanus), Nährstoffe für die Mikroorganismen und Wasser (zur Rückverdünnung) zugeführt, um einen Gäransatz mit einem Brixwert von 15° bis 35° zu erhalten. Die Gärung wird bei 16-35 °C für 5-15 Tage durchgeführt, um einen fermentierten Saft mit 7-17 vol% Ethanol zu gewinnen. Das Filtrat wird mit Stabilisierungsmittel wie Bentonit, Aktivkohle, Kieselsol und/oder Proteinen (z.B. Protein aus Erbsen oder anderen Hülsenfrüchten oder Kartoffeln) stabilisiert und ein weiteres Mal filtriert. Vom daraus wiederum erhaltenen Filtrat (blanker, fermentierter Frucht- oder Gemüsesaft mit 7-17 vol% Ethanol) wird der Alkohol in einem Verdampfer (z.B. einem Fallstromverdampfer, Plattenverdampfer, Dünnschichtverdampfer oder Zentrifugalverdampfer) bei 40-115 °C und Unterdruck abgetrennt. Zuletzt wird die zuvor abgetrennte Aromakomponente zum entalkoholisierten Konzentrat (Brixwert 10° bis 60°) hinzugefügt. Dieses Saftkonzentrat mit verringertem Zuckergehalt wird nun mit nicht-zuckerreduziertem Saftkonzentrat und Wasser auf Trinkstärke im gewünschten Verhältnis rückverschnitten, sodass eine bestimmte Zuckerreduktion von 10% bis 95% im Vergleich zum Zuckergehalt Z erzielt wird.

Alternativ wird das Saftkonzentrat mit verringertem Zuckergehalt mit nicht-zuckerreduziertem Saftkonzentrat im gewünschten Verhältnis verschnitten, um eine bestimmte Zuckerreduktion von 10% bis 95% zu erzielen. Dieses zuckerreduzierte Saftkonzentrat kann in diversen Lebensmitteln und Getränken eingesetzt werden, die einen bestimmten Saftgehalt haben, jedoch mit merkbarer Zuckerreduktion im Vergleich zu Lebensmitteln und Getränken auf der Grundlage von Vollzuckersäften (z.B. für Mischgetränke, Saftgetränke, Fruchtsaftgetränke).

### Beispiel 2

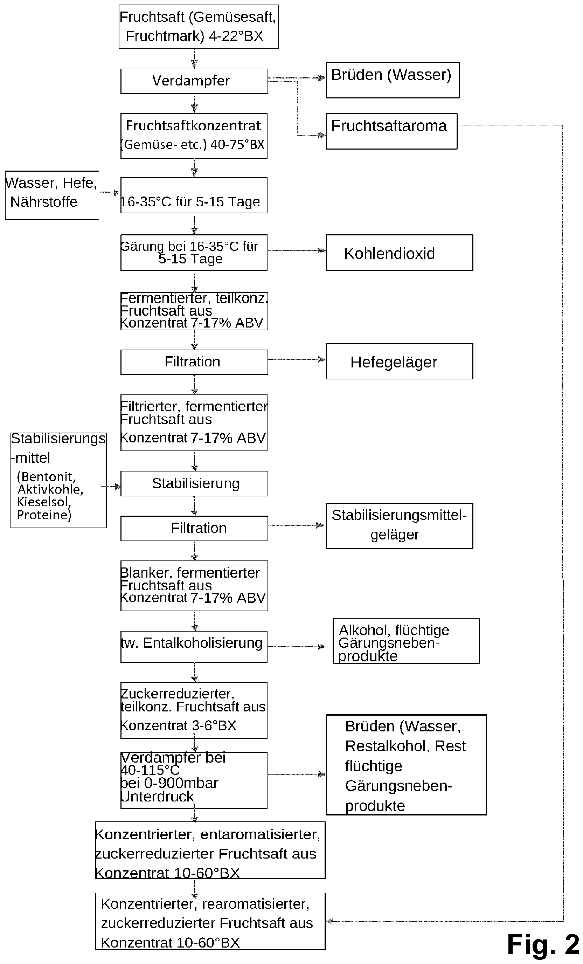

Eine weitere Ausführungsform des erfindungsgemäßen Verfahrens zur Herstellung eines Saftkonzentrats mit verringertem Zuckergehalt wird in Figur 2 gezeigt. Hier wird wie in Beispiel 1 vorgegangen, die Abtrennung des Alkohols (Ethanols) findet jedoch in zwei Schritten statt. Zuerst werden Alkohol und flüchtige Gärungsnebenprodukte (z.B. destillativ) ohne wesentlichen Wasserverlust in einer ersten Anlage abgetrennt ("tw. Entalkoholisierung"), dann wird das daraus erhaltene, teilweise entalkoholisierte Produkt (Brixwert 3°-6°) in eine zweite Anlage (in diesem Fall: Verdampfer) eingebracht, um Restalkohol sowie Wasser abzutrennen und ein Saftkonzentrat mit verringertem Zuckergehalt zu gewinnen.

## Patentansprüche

1. Verfahren zur Herstellung eines Saftkonzentrats mit verringertem Zuckergehalt, wobei das Saftkonzentrat vorzugsweise ein Fruchtsaftkonzentrat oder ein Gemüsesaftkonzentrat ist, umfassend zumindest die folgenden Schritte:
a) Bereitstellen von Saft mit einem Brixwert A und einem Zuckergehalt Z, wobei der Saft vorzugsweise ein Fruchtsaft oder ein Gemüsesaft ist,
b) Entaromatisieren des Safts, um eine Aromakomponente und einen entaromatisierten Saft zu erhalten,
c) Aufkonzentrieren des entaromatisierten Safts, um ein erstes Saftkonzentrat zu erhalten,
d) Rückverdünnen des ersten Saftkonzentrats auf einen Brixwert B, wobei der Brixwert B höher ist als der Brixwert A und wobei der Brixwert B zwischen 15° und 35°, bevorzugt zwischen 20° und 30°, liegt, wodurch ein zweites Saftkonzentrat mit dem Brixwert B erhalten wird,
e) Zugabe von Mikroorganismen, die zur alkoholischen Gärung fähig sind,
f) Fermentieren des zweiten Saftkonzentrats unter Gärbedingungen, welche die alkoholische Gärung erlauben, wodurch ein fermentiertes Erzeugnis mit einem Ethanolgehalt von zumindest 6 vol%, bevorzugt zumindest 8 vol%, insbesondere zumindest 10 vol%, erhalten wird und
g) Abtrennen von Ethanol und weiteren Fermentationsprodukten aus dem fermentierten Erzeugnis in einem Verdampfer, vorzugsweise einem Fallstromverdampfer, Plattenverdampfer, Dünnschichtverdampfer oder Zentrifugalverdampfer, wodurch das Saftkonzentrat mit verringertem Zuckergehalt erhalten wird.

2. Verfahren zur Herstellung eines Safts mit verringertem Zuckergehalt, wobei der Saft vorzugsweise ein Fruchtsaft oder ein Gemüsesaft ist, umfassend zumindest die folgenden Schritte:
- Bereitstellen eines Saftkonzentrats mit verringertem Zuckergehalt, das nach dem Verfahren gemäß Anspruch 1 erhalten worden ist, und
- Verdünnen und Vermischen mit einem Saft oder einem weiteren Saftkonzentrat, so dass der Saft mit verringertem Zuckergehalt erhalten wird, wobei der verringerte Zuckergehalt unter dem Zuckergehalt Z liegt, vorzugsweise wobei der verringerte Zuckergehalt im Vergleich zum Zuckergehalt Z 90% oder weniger, 80% oder weniger, 70% oder weniger, 60% oder weniger, 50% oder weniger beträgt;
vorzugsweise wobei zumindest ein Teil der zuvor abgetrennten Aromakomponente rückgeführt wird.

3. Verfahren nach einem der Ansprüche 1 oder 2, wobei die weiteren Fermentationsprodukte in Schritt g) aus der Gruppe bestehend aus Essigsäure, Ethylacetat, Acetaldehyd, Frucht-Estern und Fuselölen ausgewählt sind.

4. Verfahren nach einem der Ansprüche 1 bis 3, wobei das Abtrennen von Ethanol in Schritt g) in einem mehrstufigen Verdampfer bei stufenweiser Absenkung der Temperatur erfolgt.

5. Verfahren nach einem der Ansprüche 1 bis 4, wobei die Gärbedingungen in Schritt f) eine Gärtemperatur zwischen 15° und 35°C, bevorzugt 15°C bis 25°C, insbesondere zwischen 20°C bis 25°C, umfassen.

6. Verfahren nach einem der Ansprüche 1 bis 5, wobei die Mikroorganismen in Schritt e) zumindest Hefe der Gattung *Saccharomyces,* vorzugsweise *Saccharomyces cerevisiae,* insbesondere *Saccharomyces cerevisiae* var. cerevisiae oder *Saccharomyces cerevisiae* var. bayanus, umfassen.

7. Verfahren noch einem der Ansprüche 1 bis 6, wobei nach Schritt f) zumindest ein Teil der Mikroorganismen entfernt wird, vorzugsweise durch Filtration.

8. Verfahren nach einem der Ansprüche 1 bis 7, wobei vor Schritt g) Stabilisierungsmittel wie Bentonit, Aktivkohle, Kieselsol und/oder Proteine zugegeben wird, vorzugsweise wobei diese Zugabe nach Schritt f) erfolgt.

9. Verfahren nach einem der Ansprüche 1 bis 8, wobei das erste Saftkonzentrat einen Wasseranteil von 25 Gew% bis 40 Gew%, bevorzugt 30 Gew% - 35 Gew%, aufweist.

10. Verfahren nach einem der Ansprüche 1 bis 9, wobei das Saftkonzentrat mit verringertem Zuckergehalt ein Fruchtsaftkonzentrat ist, ausgewählt aus Apfelsaftkonzentrat, Aprikosensaftkonzentrat, Bananensaftkonzentrat, Johannisbeersaftkonzentrat, Weintraubensaftkonzentrat, Grapefruitsaftkonzentrat, Guavensaftkonzentrat, Zitronensaftkonzentrat, Mangosaftkonzentrat, Orangensaftkonzentrat, Passionsfruchtsaftkonzentrat, Pfirsichsaftkonzentrat, Birnensaftkonzentrat, Kiwisaftkonzentrat, Ananassaftkonzentrat, Himbeersaftkonzentrat, Sauerkirschensaftkonzentrat, Erdbeersaftkonzentrat, Tomatensaftkonzentrat, Mandarinensaftkonzentrat und Gemischen davon, insbesondere ausgewählt aus Apfelsaftkonzentrat, Birnensaftkonzentrat und Orangensaftkonzentrat; oder wobei das Saftkonzentrat mit verringertem Zuckergehalt ein Gemüsesaftkonzentrat ist, ausgewählt aus Karottensaftkonzentrat, Rote-Bete-Saftkonzentrat und Gemischen davon; oder wobei das Saftkonzentrat ein Gemisch aus dem vorgenannten Fruchtsaftkonzentrat und aus dem vorgenannten Gemüsesaftkonzentrat ist.

11. Verfahren nach einem der Ansprüche 1 bis 10, wobei der Saft ein Fruchtsaft ist, ausgewählt aus Apfelsaft, Aprikosensaft, Bananensaft, Johannisbeersaft, Weintraubensaft, Grapefruitsaft, Guavensaft, Zitronensaft, Mangosaft, Orangensaft, Passionsfruchtsaft, Kiwisaft, Pfirsichsaft, Birnensaft, Ananassaft, Himbeersaft, Sauerkirschensaft, Erdbeersaft, Tomatensaft, Mandarinensaft und Gemischen davon, insbesondere ausgewählt aus Apfelsaft, Birnensaft und Orangensaft; oder wobei der Saft ein Gemüsesaft ist, ausgewählt aus Karottensaft, Rote-Bete-Saft und Gemischen davon; oder wobei der Saft ein Gemisch aus dem vorgenannten Fruchtsaft und aus dem vorgenannten Gemüsesaft ist.

12. Saftkonzentrat, vorzugsweise Fruchtsaftkonzentrat oder Gemüsesaftkonzentrat, erhältlich nach dem Verfahren nach einem der Ansprüche 1 bis 11.

13. Saft, vorzugsweise Fruchtsaft oder Gemüsesaft, erhältlich nach dem Verfahren nach einem der Ansprüche 2 bis 11.

14. Saftkonzentrat mit verringertem Zuckergehalt, wobei das Saftkonzentrat ausgewählt ist aus:
Apfelsaftkonzentrat mit einem Zuckergehalt von höchstens 17%gew, bevorzugt höchstens 14%gew, insbesondere höchstens 11%gew, einem Kaliumgehalt von mindestens 15.000mg/kg, bevorzugt mindestens 17.000 mg/kg, insbesondere mindestens 23.000 mg/kg, einem Essigsäuregehalt von höchstens 1000 mg/kg oder gar höchstens 900 mg/kg, bevorzugt höchstens 800 mg/kg, insbesondere höchstens 700 mg/kg, und vorzugsweise einem Glyceringehalt von zumindest 40 g/L, bevorzugt zumindest 42 g/L, insbesondere zumindest 45 g/L, und einem
Orangensaftkonzentrat mit einem Zuckergehalt von höchstens 17%gew, bevorzugt höchstens 14%gew, insbesondere höchstens 11%gew, einem Kaliumgehalt von mindestens 9500mg/kg, bevorzugt mindestens 12.000 mg/kg, insbesondere mindestens 15.000 mg/kg, einem Essigsäuregehalt von höchstens 280 mg/kg, bevorzugt höchstens 240 mg/kg, insbesondere höchstens 200 mg/kg, und vorzugsweise einem Glyceringehalt von zumindest 18 g/L, bevorzugt zumindest 20 g/L, insbesondere zumindest 22 g/L; vorzugsweise wobei das Saftkonzentrat erhältlich nach dem Verfahren gemäß einem der Ansprüche 1 bis 11 ist.

15. Saft mit verringertem Zuckergehalt, wobei der Saft ausgewählt ist aus:
Apfelsaft mit einem Zuckergehalt von höchstens 81 g/L, bevorzugt höchstens 72 g/L, insbesondere höchstens 63 g/L, einem Kaliumgehalt von 900 mg/L - 1500 mg/L, bevorzugt 1000 mg/L - 1400 mg/L, insbesondere 1100 mg/L - 1300 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
Orangensaft mit einem Zuckergehalt von höchstens 72 g/L, bevorzugt höchstens 64 g/L, insbesondere höchstens 56 g/L, einem Kaliumgehalt von 1300 mg/L - 2500 mg/L, bevorzugt 1500 mg/L - 2300 mg/L, insbesondere 1600 mg/L - 2200 mg/L, einem Essigsäuregehalt von höchstens 400 mg/L, bevorzugt höchstens 300 mg/L, insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
Ananassaft mit einem Zuckergehalt von höchstens 90 g/L, bevorzugt höchstens 80 g/L, insbesondere höchstens 70 g/L, einem Kaliumgehalt von 900 mg/L - 2000 mg/L, bevorzugt 1000 mg/L - 1900 mg/L, insbesondere 1100 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
Bananensaft mit einem Zuckergehalt von höchstens 145,8 g/L, bevorzugt höchstens 129,6 g/L, insbesondere höchstens 113,4 g/L, einem Kaliumgehalt von 2900 mg/L - 4200 mg/L, bevorzugt 3100 mg/L - 4000 mg/L, insbesondere 3300 mg/L - 3800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
Birnensaft mit einem Zuckergehalt von höchstens 78,3 g/L, bevorzugt höchstens 69,6 g/L, insbesondere höchstens 60,9 g/L, einem Kaliumgehalt von 1000 mg/L - 2000 mg/L, bevorzugt 1100 mg/L - 1900 mg/L, insbesondere 1200 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
Kiwisaft mit einem Zuckergehalt von höchstens 68,4 g/L, bevorzugt höchstens 60,8 g/L, insbesondere höchstens 53,2 g/L, einem Kaliumgehalt von 2500 mg/L - 4600 mg/L, bevorzugt 2700 mg/L - 4400 mg/L, insbesondere 2900 mg/L - 4200 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L, und
Weintraubensaft mit einem Zuckergehalt von höchstens 120,6 g/L, bevorzugt höchstens 107,2 g/L, insbesondere höchstens 93,8 g/L, einem Kaliumgehalt von 900 mg/L - 2000 mg/L, bevorzugt 1000 mg/L - 1900 mg/L, insbesondere 1100 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L;
vorzugsweise wobei der Saft erhältlich nach dem Verfahren gemäß einem der Ansprüche 2 bis 11 ist.
